(19) Europäisches Patentamt
European Patent Office
Office européen des brevets

(11) **EP 1 614 598 B1**

(12) **FASCICULE DE BREVET EUROPEEN**

(45) Date de publication et mention
de la délivrance du brevet:
**01.12.2010 Bulletin 2010/48**

(51) Int Cl.:
**B60T 8/00** (2006.01)   **B60T 7/08** (2006.01)
**B60T 8/32** (2006.01)   **G01P 3/44** (2006.01)
**F16D 65/14** (2006.01)

(21) Numéro de dépôt: **05014440.1**

(22) Date de dépôt: **04.07.2005**

(54) **Dispositif de freinage pour véhicule automobile**

Bremsvorrichtung für ein Fahrzeug

Braking device for a vehicle

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **07.07.2004 FR 0407575**

(43) Date de publication de la demande:
**11.01.2006 Bulletin 2006/02**

(73) Titulaire: **ROBERT BOSCH GMBH
70442 Stuttgart (DE)**

(72) Inventeur: **Pasquet, Thierry
93190 Livry Gargan (FR)**

(74) Mandataire: **Hurwic, Aleksander Wiktor
Bosch Systemes de Freinage
Service Brevets
126, rue de Stalingrad
93700 Drancy (FR)**

(56) Documents cités:
**US-A- 5 081 702        US-A- 5 404 304
US-A1- 2004 069 580**

## Description

La présente invention concerne un dispositif de freinage pour véhicule automobile.

Plus précisément l'invention concerne un dispositif de freinage pour véhicule automobile du type comportant un frein de parking.

US 2004/0069580 **décrit un dispositif de surveillance d'activation de frein de parking pour camion.**

**Par ailleurs**, il est connu d'équiper les véhicules automobiles de dispositifs électroniques d'assistance à la conduite pour améliorer la tenue de route ou l'efficacité du freinage des véhicules.

Parmi ces dispositifs électroniques d'assistance, on peut citer l'ABS (« Anti-lock Braking System » conformément à la terminologie anglaise), qui est un dispositif empêchant les roues de se bloquer lors d'un freinage, ou l'ESP (« Electronic Stability Program » conformément à la terminologie anglaise) qui est un dispositif assurant la stabilité du véhicule notamment lors des virages ou sur chaussée glissante.

Ces dispositifs électroniques d'assistance utilisent généralement un calculateur qui traite des données provenant de capteurs situés à proximité des roues, et qui agit automatiquement sur le dispositif de freinage du véhicule automobile. Les données sont habituellement transférées entre les capteurs et le calculateur par des câbles électriques.

Un frein de parking de véhicule a pour fonction de bloquer les roues du véhicule lorsque celui-ci est en stationnement. Le frein de parking peut être actionné par des moyens mécaniques ou électriques, dont on souhaite contrôler le bon fonctionnement.

Toutefois, l'ajout de moyens de contrôle du frein de parking requiert a priori la gestion de données de contrôle devant être transférées via des câbles électriques comme c'est le cas des dispositifs d'assistance évoqués ci-dessus.

Or, le montage de câbles électriques dans un véhicule est d'autant plus coûteux que ces câbles sont nombreux.

L'invention a notamment pour but de contrôler le bon fonctionnement d'un frein de parking à l'aide de moyens simples et efficaces, ceci en minimisant le nombre de câbles électriques supplémentaires nécessaires au fonctionnement des moyens de contrôle du frein de parking.

A cet effet l'invention a pour objet un dispositif de freinage pour véhicule automobile, du type comportant un frein de parking. En plus, le dispositif de freinage comprend des moyens de détection d'état d'un organe du frein de parking, ces moyens de détection d'état fournissant une information à un calculateur par l'intermédiaire d'un câble électrique reliant ce calculateur à un dispositif placé à proximité des moyens de détection d'état, dit dispositif voisin.

Grâce à ce dispositif de freinage, le véhicule automobile comprend des moyens détectant l'état d'un organe du frein de parking, fournissant une information au calculateur du véhicule automobile. De plus, les moyens de détection d'état utilisant un câble électrique commun avec le dispositif voisin, le nombre de câbles supplémentaires nécessaires au fonctionnement des moyens de détection d'état est limité.

Un dispositif de freinage selon l'invention peut en outre comporter l'une ou plusieurs des caractéristiques suivantes :

- le dispositif voisin est apte à fournir un signal, dit signal voisin, transmis par le câble électrique, ce signal voisin pouvant évoluer entre une première valeur $S_v^1$ et une seconde valeur $S_v^2$ à un bruit près, ces deux valeurs correspondant respectivement à un premier et un second état du dispositif voisin ;

- les moyens de détection d'état fournissent un signal porteur de l'information d'état du frein de parking, dit signal de détection d'état, destiné à être additionné au signal voisin, ce signal de détection d'état pouvant prendre une première valeur $S_p^1$ et une seconde valeur $S_p^2$, correspondant respectivement à un état dans lequel le frein de parking est désactivé et à un état dans lequel le frein de parking est activé ;

- les quatre valeurs $S_v^1 + S_p^1$, $S_v^2 + S_p^1$, $S_v^1 + S_p^2$ et $S_v^2 + S_p^2$ du signal égal à la somme du signal voisin et du signal de détection sont différentes deux à deux, au bruit près ;

- l'organe de frein de parking est une clavette destinée à bloquer un frein en position de blocage d'une roue de véhicule ;

- le dispositif voisin comprend un organe choisi parmi un dispositif de détection de rotation d'une roue et un actionneur de frein ;

- le dispositif voisin comprend un actionneur de frein porté par un étrier du dispositif de freinage ;

- les deux valeurs du signal voisin correspondent respectivement à un état $E_p^1$ dans lequel l'actionneur de frein est activé et un état $E_p^2$ dans lequel l'actionneur de frein est désactivé ;

- le dispositif voisin comprend un dispositif de détection de rotation d'une roue porté par un porte-moyeu de la roue ;

- les deux valeurs du signal voisin sont fournies par le dispositif de détection de rotation d'une roue, ces deux valeurs correspondant respectivement à un état $E_v^1$ dans lequel la roue est immobile, et à un état $E_v^2$ dans lequel la roue est en rotation ;
- le dispositif de détection de rotation d'une roue comporte des moyens magnétiques ou optiques portés par un porte-moyeu de la roue ;
- le dispositif de détection de rotation d'une roue comprend une sonde à effet Hall ;
- le dispositif voisin est apte à fournir un signal caractéristique d'au moins trois états du dispositif voisin ;
- le signal fourni par le dispositif voisin est une impulsion dont la durée est fonction de l'état du dispositif voisin.

La présente invention a principalement pour objet un dispositif de freinage pour véhicule automobile, du type comportant un frein de parking comprenant des moyens de détection d'état d'un organe du frein de parking, ces moyens de détection d'état fournissant une information à un calculateur par l'intermédiaire d'un câble électrique reliant ce calculateur à un dispositif placé à proximité des moyens de détection d'état, dit dispositif voisin, ledit dispositif étant apte à fournir un signal, dit signal voisin, transmis par le câble électrique, ce signal voisin pouvant évoluer entre une première valeur $S_v^1$ et une seconde valeur $S_v^2$ à un bruit près, ces deux valeurs correspondant respectivement à un premier et un second état du dispositif voisin **caractérisé en ce que** les moyens de détection d'état fournissent un signal porteur de l'information d'état du frein de parking, dit signal de détection d'état, destiné à être additionné au signal voisin, ce signal de détection d'état pouvant prendre une première valeur $S_p^1$ et une seconde valeur $S_p^2$, correspondant respectivement à un état dans lequel le frein de parking est désactivé et à un état dans lequel le frein de parking est activé.

La présente invention a également pour objet un dispositif de freinage pour véhicule automobile, dans lequel les quatre valeurs $S_v^1 + S_p^1$, $S_v^2 + S_p^1$, $S_v^1 + S_p^2$ et $S_v^2 + S_p^2$ du signal égal à la somme du signal voisin et du signal de détection sont différentes deux à deux, au bruit près.

La présente invention a également pour objet un dispositif de freinage pour véhicule automobile, dans lequel l'organe de frein de parking est une clavette destinée à bloquer un frein en position de blocage d'une roue de véhicule.

La présente invention a également pour objet un dispositif de freinage pour véhicule automobile selon, dans lequel le dispositif voisin comprend un organe choisi parmi un dispositif de détection de rotation d'une roue et un actionneur de frein.

L'invention a également pour objet un dispositif de freinage pour véhicule automobile, dans lequel le dispositif voisin comprend un actionneur de frein porté par un étrier du dispositif de freinage.

L'invention a également pour objet un dispositif de freinage pour véhicule automobile prises ensemble, dans lequel les deux valeurs du signal voisin correspondent respectivement à un état $E_p^1$ dans lequel l'actionneur de frein est activé et un état $E_p^2$ dans lequel l'actionneur de frein est désactivé.

L'invention a également pour objet un dispositif de freinage pour véhicule automobile, dans lequel le dispositif voisin comprend un dispositif de détection de rotation d'une roue porté par un porte-moyeu de la roue.

L'invention a également pour objet un dispositif de freinage pour véhicule automobile, dans lequel les deux valeurs du signal voisin sont fournies par le dispositif de détection de rotation d'une roue, ces deux valeurs correspondent respectivement à un état $E_v^1$ dans lequel la roue est immobile, et à un état $E_v^2$ dans lequel la roue est en rotation.

L'invention a également pour objet un dispositif de freinage pour véhicule automobile, dans lequel le dispositif de détection de rotation d'une roue comporte des moyens magnétiques ou optiques portés par un porte-moyeu de la roue.

L'invention a également pour objet un dispositif de freinage pour véhicule automobile, dans lequel le dispositif de détection de rotation d'une roue comprend une sonde à effet Hall.

L'invention a également pour objet un dispositif de freinage pour véhicule automobile, dans lequel le dispositif voisin est apte à fournir un signal caractéristique d'au moins trois états du dispositif voisin.

L'invention a également pour objet un dispositif de freinage, dans lequel le signal fourni par le dispositif voisin est une impulsion dont la durée est fonction de l'état du dispositif voisin.

L'invention sera mieux comprise à la lecture de la description qui va suivre, donnée uniquement à titre d'exemple et faite en se référant aux dessins annexés dans lesquels :

- la figure 1 est un schéma d'un véhicule automobile muni d'un dispositif de freinage selon l'invention ;
- la figure 2 est une vue des moyens de détection d'état du dispositif de freinage selon un premier mode de réalisation de l'invention ;

- la figure 3 est un schéma de circuit électrique comprenant différents éléments des moyens de détection d'état selon le premier mode de réalisation de l'invention ;
- la figure 4 est un graphique représentant les valeurs prises par un signal $I_T$ transmis sur le câble électrique entre les moyens de détection d'état représentés sur la figure 3 et le calculateur du véhicule, le signal $I_T$ étant caractéristique de l'état du dispositif de freinage ;
- la figure 5 est une vue des moyens de détection d'état du dispositif de freinage selon un deuxième mode de réalisation de l'invention ;
- la figure 6 est un schéma de circuit électrique d'un des éléments des moyens de détection d'état, selon le deuxième mode de réalisation de l'invention ;
- les figures 7a à 7e sont des graphiques représentant au cours du temps des signaux transmis sous forme d'impulsions entre les moyens de détection d'état, selon un troisième mode de réalisation, et le calculateur du véhicule.

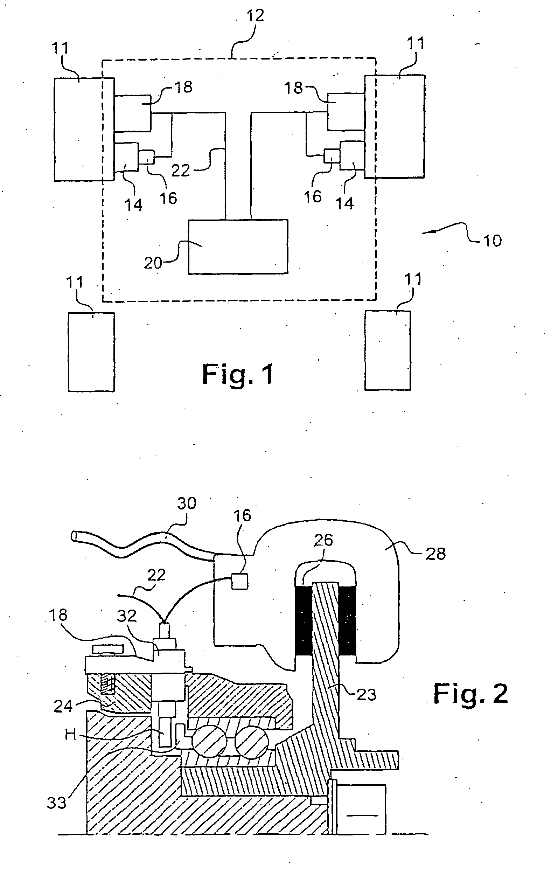

Un véhicule automobile 10 schématisé par quatre roues 11 est représenté sur la figure 1. Le véhicule automobile 10 comprend un dispositif de freinage désigné par la référence générale 12. Le dispositif de freinage 12 comporte notamment un frein de parking dont on a représenté uniquement un organe 14 disposé à proximité des roues 11.

Le dispositif de freinage 12 est muni de moyens 16 de détection d'état de l'organe 14 de frein de parking. Ces moyens 16 de détection d'état, qui seront décrits ultérieurement, sont adaptés pour fournir des données relatives à l'état de l'organe 14 de frein de parking.

A proximité de ces moyens 16 de détection d'état, le dispositif de freinage comprend un dispositif 18 dit dispositif voisin. Le dispositif voisin 18 échange des données avec un calculateur 20 du dispositif de freinage 12.

Les données échangées sont portées par un signal, dit signal voisin $S_v$, transmis sur au moins un câble électrique 22 reliant le calculateur 20 au dispositif de freinage 12.

Le dispositif voisin est par exemple un dispositif de détection de rotation de roue ou une vanne du dispositif de freinage 12, destinée à commander l'admission de liquide de frein.

Le calculateur 20 est par exemple le calculateur d'un dispositif électronique d'assistance.

Les moyens 16 de détection d'état sont connectés au câble électrique 22, pour pouvoir transmettre au calculateur 20 un signal, dit signal de détection d'état $S_p$, porteur des données relatives à l'état de l'organe 14 de frein de parking. Ainsi, le nombre de câbles supplémentaires nécessaires au fonctionnement des moyens 16 de détection d'état est limité du fait que le câble électrique 22 est commun à la transmission du signal voisin et du signal de détection d'état. On peut considérer que le signal voisin $S_v$ et le signal de détection d'état $S_p$ sont multiplexés sur le câble électrique 22.

Le dispositif de freinage 12 comporte des moyens de freinage à disque équipant au moins les roues avant du véhicule.

Ainsi, en se référant à la figure 2, on voit que le dispositif 12 comprend, associé à chaque roue avant du véhicule, un disque de frein 23, représenté sur la figure 2, solidaire en rotation de la roue. Le disque de frein 23 est mobile par rapport à un porte-moyeu 24. Le dispositif de freinage 12 comporte des plaquettes de frein 26 destinées à frotter sur le disque de frein 23 pour s'opposer à sa rotation par rapport au porte-moyeu 24. Les plaquettes de frein 26 sont destinées à être serrées contre le disque de frein 23 à l'aide de moyens hydrauliques classiques dont on a représenté un étrier 28 portant un vérin hydraulique classique (non représenté). Ces moyens hydrauliques sont alimentés en liquide de frein par un conduit 30.

Les moyens 16 de détection d'état de l'organe 14 de frein de parking sont portés par l'étrier 28. Ces moyens 16 détectent par exemple le déplacement ou l'effort subi par l'organe 14 du frein de parking. Cet organe 14 peut être une clavette destinée à bloquer la course du vérin hydraulique en position de blocage de la roue.

Les moyens 16 peuvent détecter deux états de l'organe 14 de frein de parking : un premier état dans lequel cet organe 14 est activé et un second état dans lequel cet organe 14 est désactivé, que l'on désigne respectivement par $E_p^1$ et $E_p^2$.

Selon un premier mode de réalisation représenté sur la figure 2, le dispositif voisin 18 comprend un dispositif 32 de détection de rotation de roue, porté par le porte-moyeu 24, utilisé par exemple dans un système ABS.

Ce dispositif 32 de détection de rotation de roue comprend des moyens classiques de type magnétique ou optique. Dans l'exemple décrit, le dispositif de détection 32 comprend des moyens magnétiques tels qu'une sonde à effet Hall H, porté par le porte-moyeu 24, associée à une roue phonique 33 liée en rotation au disque 23.

Le dispositif 32 de détection de rotation de roue peut détecter deux états : un premier état dans lequel la roue est immobile et un second état dans lequel la roue est en rotation, que l'on désigne respectivement par $E_v^1$ et $E_v^2$.

Aux quatre états $E_p^1$, $E_p^2$, $E_v^1$ et $E_v^2$ détectés par les moyens 16 (les deux premiers) et le dispositif 32 (les 2 derniers), correspondent respectivement quatre signaux $S_p^1$, $S_p^2$, $S_v^1$ et $S_v^2$ destinés à être transmis sur le câble électrique 22.

La transmission vers le calculateur 20, sur un unique câble électrique 22, des données d'état du dispositif 32 de détection de rotation de roue et des données d'état des moyens 16 de détection d'état est réalisée au moyen d'un multiplexage simple consistant à sommer les signaux correspondant aux états détectés. Les différents cas sont rassemblés dans le tableau suivant :

| Dispositif voisin<br>Frein de parking | $E_v^1$ | $E_v^2$ |
|---|---|---|
| $E_p^1$ | $S_v^1 + S_p^1$ | $S_v^2 + S_p^1$ |
| $E_p^2$ | $S_v^1 + S_p^2$ | $S_v^2 + S_p^2$ |

Comme cela sera précisé plus en détail par la suite, les valeurs des signaux $S_p^1$, $S_p^2$, $S_v^1$ et $S_v^2$ doivent respecter certaines relations pour que le calculateur 20 réalise un démultiplexage efficace, c'est à dire pour que le calculateur 20 différentie les signaux sommés.

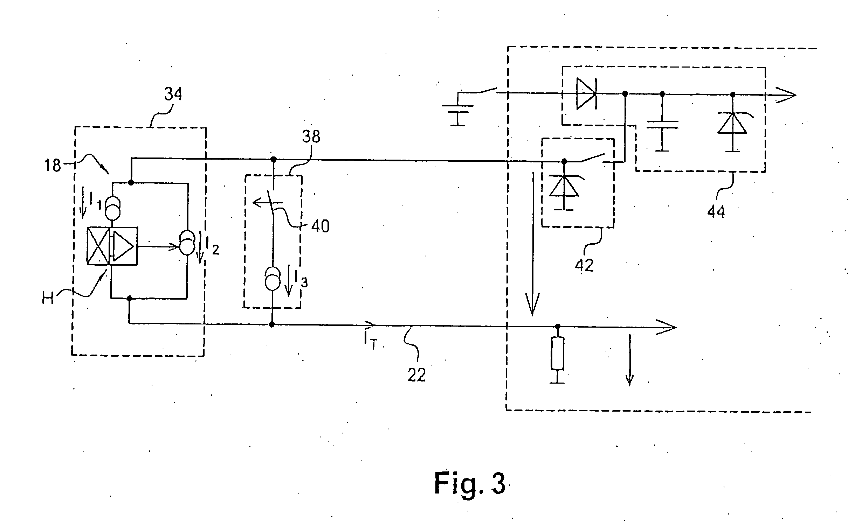

On a représenté sur la figure 3 un schéma de circuit électrique comprenant différents éléments des moyens 16 de détection d'état et du dispositif 32 de détection de rotation de roue selon le premier mode de réalisation de l'invention.

Le circuit électrique comprend un premier module 34 comportant le dispositif voisin 18, et différents éléments électriques associés à la sonde à effet Hall H, notamment des générateurs de courant $I_1$ et $I_2$. Ces générateurs fournissent sur le câble électrique 22 :

- un signal $S_v^1 = I_1$ lorsque la sonde détecte l'état $E_v^1$, c'est à dire lorsque la roue est immobile, et

- un signal $S_v^2 = I_1 + I_2$ lorsque la sonde détecte l'état $E_v^2$, c'est à dire lorsque la roue est en mouvement.

Le circuit électrique de la figure 3 comprend également un deuxième module 38 correspondant aux moyens 16 de détection d'état. Pour réaliser le multiplexage, le deuxième module 38 est raccordé en parallèle avec le premier module 34. Le deuxième module 38 comporte un générateur de courant $I_3$ commandé par un contacteur 40 sec ou intelligent.

Le contacteur 40 est ouvert lorsque l'organe de frein de parking est dans l'état $E_p^1$, c'est-à-dire lorsqu'il est désactivé, et est fermé lorsque l'organe de frein de parking est dans l'état $E_p^2$, c'est-à-dire lorsqu'il est activé.

Le signal résultant du multiplexage des deux signaux est un courant noté $I_T$, transmis sur le câble électrique 22. Ce courant est égal à la somme des courants créés par les deux premiers modules 34 et 38. Les valeurs possibles du courant $I_T$ sont rassemblées dans le tableau suivant :

| Dispositif voisin<br>Frein de parking | $E_v^1$ | $E_v^2$ |
|---|---|---|
| $E_p^1$ | $I_1$ | $I_1 + I_2$ |
| $E_p^2$ | $I_1 + I_3$ | $I_1 + I_2 + I_3$ |

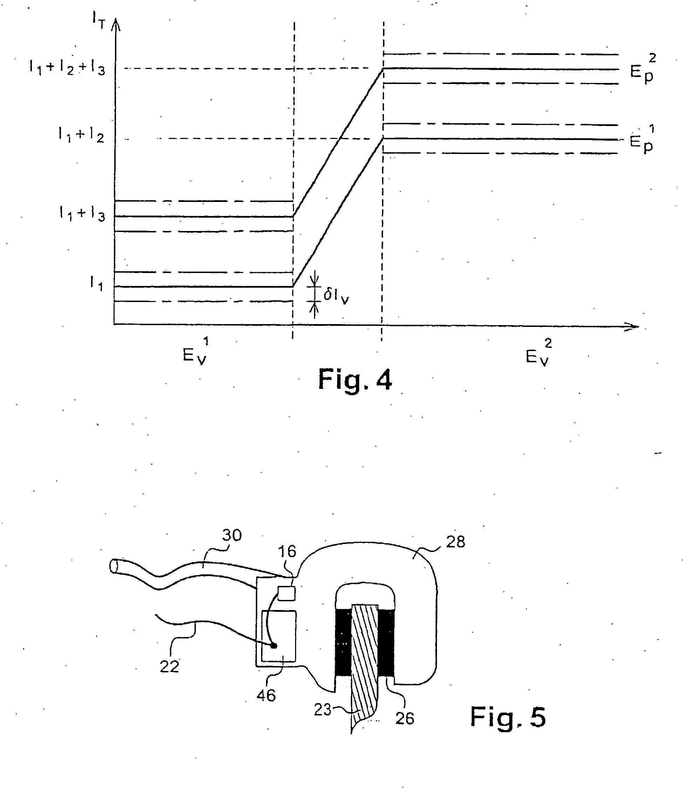

La figure 4 est un graphique représentant les valeurs prises par le signal multiplexé $I_T$ transmis sur le câble électrique 22 en fonction des états $E_p^1$, $E_p^2$, $E_v^1$ et $E_v^2$ du dispositif 32 de détection de tours de roues et du dispositif 14 de détection d'état.

On désigne par $\delta I_v$ l'amplitude du bruit du signal voisin fourni par le dispositif 32 de détection de tours de roues. Les quatre états sont discernables les uns des autres à condition que les valeurs du courant $I_T$ correspondant à ces quatre états soient différentes deux à deux à $2\delta I_v$ près.

Si de plus on désigne par $\delta I_p$ l'amplitude du bruit du signal de détection d'état, alors les quatre états sont discernables les uns des autres à condition que les valeurs du courant $I_T$ correspondant à ces quatre états soient différentes deux à deux à $2\delta I_v + 2\delta I_p$ près.

Le circuit électrique de la figure 3 comporte également un module limiteur de tension 42 dont le rôle est d'éviter que le signal transmis sur le câble électrique ne sature et un module de stabilisation 44 destiné à supprimer des éventuelles fluctuations du signal.

Selon un second mode de réalisation représenté sur la figure 5, le dispositif voisin 18 comprend un actionneur de frein 46, par exemple une vanne 46 contrôlant l'admission du liquide de frein. Cette vanne 46, qui est portée par l'étrier 28 du dispositif de freinage, peut prendre deux états : un état $E_v^1$ dans lequel l'étrier 28 est ouvert et un état $E_v^2$ dans lequel l'étrier 28 est serré. Les informations relatives à l'état de la vanne 46 sont transmises au calculateur 20 par le câble électrique 22.

Comme dans le premier mode de réalisation, le frein de parking peut prendre les deux états $E_p^1$ et $E_p^2$ : un premier état dans lequel il est activé et un second état dans lequel il est désactivé.

Les informations relatives à l'état de l'organe 14 de frein de parking et les informations relatives à l'état de la valve 46 sont multiplexées sur le câble électrique 22.

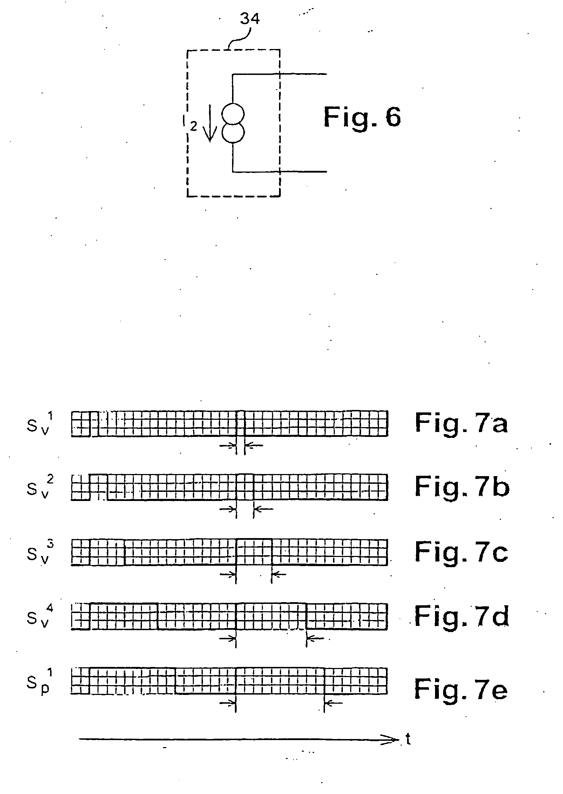

Le circuit électrique correspondant au second mode de réalisation est identique à celui du premier mode de réalisation représenté sur la figure 3, à l'exception du premier module 34 qui est remplacé par celui représenté sur la figure 6.

Le premier module 34 représenté sur la figure 6 comprend un générateur de courant commandé par la vanne 46. Le générateur de courant est destiné à fournir une intensité $I_2$ lorsque la vanne est activée et une intensité nulle sinon.

Les valeurs possibles du courant $I_T$ sont alors rassemblées dans le tableau suivant :

| Dispositif voisin Frein de parking | $E_v^1$ | $E_v^2$ |
|---|---|---|
| $E_p^1$ | 0 | $I_2$ |
| $E_p^2$ | $I_3$ | $I_2 + I_3$ |

Les remarques concernant les relations imposées entre les valeurs des intensités $I1$, $I_2$ et $I_3$ sont identiques à celles formulées dans la description du premier mode de réalisation.

Selon un troisième mode de réalisation non représenté, le dispositif voisin 18 comprend un capteur pouvant détecter plus que deux états. Le dispositif voisin 18 peut être, par exemple, un dispositif de détection de rotation d'une roue, fournissant en outre une information relative au sens de rotation de la roue.

Les données fournies par le dispositif voisin 18 sont portées par le signal voisin $S_v$ transmis au calculateur 20 sur le câble électrique 22. Les figures 7a à 7d montrent quatre représentations du signal voisin $S_v^1, S_v^2, S_v^3, S_v^4$ correspondant chacune respectivement à un état $E_v^1, E_v^2, E_v^3, E_v^4$ pouvant être détecté par le dispositif voisin 18. Chaque état est codé sous la forme d'une impulsion de durée propre si bien que les impulsions sont différentiables les unes des autres.

Le signal $S_p$, porteur des données fournies par les moyens 16 de détection d'état de l'organe 14 de frein de parking, est représenté sur la figure 7e. Ce signal est représenté par une impulsion $S_v^1$ de durée différente de celles des impulsions fournies par le dispositif voisin 18 si le frein de parking est activé, et par un signal $S_v^2$ nul si le frein de parking est désactivé.

Le multiplexage des signaux $S_p$ et $S_v$ est réalisé en les sommant. Les impulsions sont de durées différentes, il est donc possible de les distinguer et de démultiplexer les signaux.

Le nombre d'états que l'on peut transmettre sur le câble électrique 22 est d'autant plus grand que le bruit de transmission est faible.

**Revendications**

1. Dispositif de freinage (12) pour véhicule automobile, du type comportant un frein de parking comprenant des moyens (16) de détection d'état d'un organe (14) du frein de parking, ces moyens (16) de détection d'état fournissant une information à un calculateur (20) par l'intermédiaire d'un câble électrique (22) reliant ce calculateur à un dispositif (18) placé à proximité des moyens (16) de détection d'état, dit dispositif voisin (18), ledit dispositif voisin (18) étant apte à fournir un signal, dit signal voisin, transmis par le câble électrique (22), ce signal voisin pouvant évoluer entre une première valeur $S_v^1$ et une seconde valeur $S_v^2$ à un bruit près, ces deux valeurs correspondant respectivement à un premier et un second état du dispositif voisin (18) **caractérisé en ce que** les moyens (16) de détection d'état fournissent un signal porteur de l'information d'état du frein de parking, dit signal de détection d'état, destiné à être additionné au signal voisin, ce signal de détection d'état pouvant prendre une première valeur $S_p^1$ et une seconde valeur $S_p^2$, correspondant respectivement à un état dans lequel le frein de parking est désactivé et à un état dans lequel le frein de parking est activé.

2. Dispositif de freinage pour véhicule automobile selon la revendication 1, dans lequel les quatre valeurs $S_v^1 + S_p^1$, $S_v^2 + S_p^1$, $S_v^1 + S_p^2$ et $S_v^2 + S_p^2$ du signal égal à la somme du signal voisin et du signal de détection sont différentes deux à deux, au bruit près.

3. Dispositif de freinage pour véhicule automobile selon l'une des revendications 1 à 2, dans lequel l'organe (14) de frein de parking est une clavette destinée à bloquer un frein en position de blocage d'une roue de véhicule.

4. Dispositif de freinage pour véhicule automobile selon l'une des revendications 1 à 3, dans lequel le dispositif voisin comprend un organe choisi parmi un dispositif (32) de détection de rotation d'une roue et un actionneur de frein (46).

5. Dispositif de freinage pour véhicule automobile selon la revendication 4, dans lequel le dispositif voisin comprend un actionneur de frein (46) porté par un étrier (28) du dispositif de freinage.

6. Dispositif de freinage pour véhicule automobile selon les revendications 2 et 5 prises ensemble, dans lequel les deux valeurs du signal voisin correspondent respectivement à un état $E_p^1$ dans lequel l'actionneur de frein (46) est activé et un état $E_p^2$ dans lequel l'actionneur de frein (46) est désactivé.

7. Dispositif de freinage pour véhicule automobile selon la revendication 4, dans lequel le dispositif voisin (18) comprend un dispositif (32) de détection de rotation d'une roue porté par un porte-moyeu (24) de la roue.

8. Dispositif de freinage pour véhicule automobile selon les revendications 2 et 7 prises ensemble, dans lequel les deux valeurs du signal voisin sont fournies par le dispositif (32) de détection de rotation d'une roue, ces deux valeurs correspondant respectivement à un état $E_v^1$ dans lequel la roue est immobile, et à un état $E_v^2$ dans lequel la roue est en rotation.

9. Dispositif de freinage pour véhicule automobile selon la revendication 7 ou 8, dans lequel le dispositif (32) de détection de rotation d'une roue comporte des moyens magnétiques ou optiques portés par un porte-moyeu (24) de la roue.

**10.** Dispositif de freinage pour véhicule automobile selon la revendication 9, dans lequel le dispositif (32) de détection de rotation d'une roue comprend une sonde à effet Hall (36).

**11.** Dispositif de freinage pour véhicule automobile selon la revendication 1, dans lequel le dispositif voisin (18) est apte à fournir un signal caractéristique d'au moins trois états du dispositif voisin.

**12.** Dispositif de freinage selon la revendication 11, dans lequel le signal fourni par le dispositif voisin (18) est une impulsion dont la durée est fonction de l'état du dispositif voisin.

**Claims**

**1.** Motor vehicle braking device (12), of the type comprising a parking brake, comprising means (16) for detecting the state of a member (14) of the parking brake, these state detection means (16) providing an item of information to a computer (20) via an electric cable (22) connecting this computer to a device (18) placed close to the state detection means (16), called the adjacent device (18), said adjacent device (18) being capable of providing a signal, called the adjacent signal, transmitted via the electric cable (22), this adjacent signal being able to change between a first value $S_v^1$ and a second value $S_v^2$ to within a noise level, these two values corresponding respectively to a first and a second state of the adjacent device (18) **characterized in that** the state detection means (16) provide a signal carrying the item of information on the state of the parking brake, called the state detection signal, intended to be added to the adjacent signal, this state detection signal being capable of taking a first value $S_p^1$ and a second value $S_p^2$, corresponding respectively to a state in which the parking brake is deactivated and to a state in which the parking brake is activated.

**2.** Motor vehicle braking device according to Claim 1, in which the four values $S_v^1 + S_p^1$, $S_v^2 + S_p^1$, $S_v^1 + S_p^2$ and $S_v^2 + S_p^2$ of the signal equal to the sum of the adjacent signal and the detection signal are different by twos to within the noise level.

**3.** Motor vehicle braking device according to one of Claims 1 to 2, in which the parking brake member (14) is a key intended to immobilize a brake in a position of immobilization of a vehicle wheel.

**4.** Motor vehicle braking device according to one of Claims 1 to 3, in which the adjacent device comprises a member chosen from a wheel rotation detection device (32) and a brake actuator (46).

**5.** Motor vehicle braking device according to Claim 4, in which the adjacent device comprises a brake actuator (46) supported by a caliper (28) of the braking device.

**6.** Motor vehicle braking device according to Claims 2 and 5 taken together, in which the two values of the adjacent signal correspond respectively to a state $E_p^1$ in which the brake actuator (46) is activated and a state $E_p^2$ in which the brake actuator (46) is deactivated.

**7.** Motor vehicle braking device according to Claim 4, in which the adjacent device (18) comprises a wheel rotation detection device (32) supported by a hub carrier (24) of the wheel.

**8.** Motor vehicle braking device according to Claims 2 and 7 taken together, in which the two values of the adjacent signal are provided by the wheel rotation detection device (32), these two values corresponding respectively to a state $E_v^1$ in which the wheel is immobile, and a state $E_v^2$ in which the wheel is rotating.

**9.** Motor vehicle braking device according to Claim 7 or 8, in which the wheel rotation detection device (32) comprises magnetic or optical means supported by a hub carrier (24) of the wheel.

**10.** Motor vehicle braking device according to Claim 9, in which the wheel rotation detection device (32) comprises a Hall effect probe (36).

**11.** Motor vehicle braking device according to Claim 1, in which the adjacent device (18) is capable of providing a signal characteristic of at least three states of the adjacent device.

**12.** Braking device according to Claim 11, in which the signal provided by the adjacent device (18) is a pulse whose duration is a function of the state of the adjacent device.

**Patentansprüche**

**1.** Bremsvorrichtung (12) für ein Kraftfahrzeug, vom Typ mit einer Feststellbremse, die Mittel (16) zur Erfassung des Zustands eines Organs (14) der Feststellbremse aufweist, wobei diese Zustandserfassungsmittel (16) eine Information zu einem Rechner (20) über ein elektrisches Kabel (22) leiten, das diesen Rechner mit einer nahe den Zustandserfassungsmitteln (16) angeordneten und Nachbarvorrichtung (18) genannten Vorrichtung (18) verbindet, wobei die Nachbarvorrichtung (18) ein Nachbarsignal genanntes Signal liefern kann, das von dem elektrischen Kabel (22) übertragen wird, wobei sich dieses Nachbarsignal zwischen einem ersten Wert $S_v^1$ und einem zweiten Wert $S_v^2$ bis auf ein Rauschen verändern kann, wobei diese beiden Werte einem ersten bzw. einem zweiten Zustand der Nachbarvorrichtung (18) entsprechen, **dadurch gekennzeichnet, dass** die Zustandserfassungsmittel (16) ein Zustandserfassungssignal genanntes Signal liefern, das die Zustandsinformation der Feststellbremse trägt und dazu vorgesehen ist, zum Nachbarsignal addiert zu werden, wobei dieses Zustandserfassungssignal einen ersten Wert $S_p^1$ und einen zweiten Wert $S_p^2$ annehmen kann, die einem Zustand, in dem die Feststellbremse deaktiviert ist, bzw. einem Zustand, in dem die Feststellbremse aktiviert ist, entsprechen.

**2.** Bremsvorrichtung für ein Kraftfahrzeug nach Anspruch 1, bei der die vier Werte $S_v^1 + S_p^1$, $S_v^2 + S_p^1$, $S_v^1 + S_p^2$ und $S_v^2 + S_p^2$ des Signals, das der Summe aus dem Nachbarsignal und dem Erfassungssignal entspricht, sich paarweise bis auf ein Rauschen unterscheiden.

**3.** Bremsvorrichtung für ein Kraftfahrzeug nach einem der Ansprüche 1 bis 2, bei der das Feststellbremsorgan (14) ein Keil ist, der dazu vorgesehen ist, eine Bremse in einer Stellung zur Blockierung eines Fahrzeugrads zu blockieren.

**4.** Bremsvorrichtung für ein Kraftfahrzeug nach einem der Ansprüche 1 bis 3, bei der die Nachbarvorrichtung ein Organ aufweist, das aus einer Vorrichtung (32) zur Erfassung der Drehung eines Rads und einer Bremsbetätigungseinrichtung (46) ausgewählt ist.

**5.** Bremsvorrichtung für ein Kraftfahrzeug nach Anspruch 4, bei der die Nachbarvorrichtung eine von einem Bremssattel (28) der Bremsvorrichtung getragene Bremsbetätigungseinrichtung (46) aufweist.

**6.** Bremsvorrichtung für ein Kraftfahrzeug nach den Ansprüchen 2 und 5 in Kombination, bei der die beiden Werte des Nachbarsignals einem Zustand $E_p^1$, in dem die Bremsbetätigungseinrichtung (46) aktiviert ist, bzw. einem Zustand $E_p^2$, in dem die Bremsbetätigungseinrichtung (46) deaktiviert ist, entsprechen.

**7.** Bremsvorrichtung für ein Kraftfahrzeug nach Anspruch 4, bei der die Nachbarvorrichtung (18) eine von einem Nabenhalter (24) des Rads getragene Vorrichtung (32) zur Erfassung der Drehung eines Rads aufweist.

**8.** Bremsvorrichtung für ein Kraftfahrzeug nach den Ansprüchen 2 und 7 in Kombination, bei der die beiden Werte des Nachbarsignals von der Vorrichtung (32) zur Erfassung der Drehung eines Rads bereitgestellt werden, wobei diese beiden Werte einem Zustand $E_v^1$, in dem sich das Rad nicht bewegt, bzw. einem Zustand $E_v^2$, in dem sich das Rad dreht, entsprechen.

**9.** Bremsvorrichtung für ein Kraftfahrzeug nach Anspruch 7 oder 8, bei der die Vorrichtung (32) zur Erfassung der Drehung eines Rads magnetische oder optische Mittel aufweist, die an einem Nabenhalter (24) des Rads vorgesehen sind.

**10.** Bremsvorrichtung für ein Kraftfahrzeug nach Anspruch 9, bei der die Vorrichtung (32) zur Erfassung der Drehung eines Rads eine Hallsonde (36) aufweist.

**11.** Bremsvorrichtung für ein Kraftfahrzeug nach Anspruch 1, bei der die Nachbarvorrichtung (18) ein Signal liefern kann, das für mindestens drei Zustände der Nachbarvorrichtung kennzeichnend ist.

**12.** Bremsvorrichtung für ein Kraftfahrzeug nach Anspruch 11, bei der das von der Nachbarvorrichtung (18) gelieferte Signal ein Impuls ist, dessen Dauer vom Zustand der Nachbarvorrichtung abhängig ist.

Fig. 1

Fig. 2

Fig. 3

EP 1 614 598 B1

Fig. 4

Fig. 5

Fig. 6

$S_v^1$ Fig. 7a

$S_v^2$ Fig. 7b

$S_v^3$ Fig. 7c

$S_v^4$ Fig. 7d

$S_p^1$ Fig. 7e

$t$

14

**EP 1 614 598 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040069580 A